(19) Europäisches Patentamt
European Patent Office
Office européen des brevets

(11) EP 4 521 034 A1

(12) **EUROPEAN PATENT APPLICATION**
published in accordance with Art. 153(4) EPC

(43) Date of publication:
**12.03.2025 Bulletin 2025/11**

(21) Application number: **24787397.9**

(22) Date of filing: **11.07.2024**

(51) International Patent Classification (IPC):
**F24F 7/007** (2006.01)        **F24F 11/77** (2018.01)
**F24F 110/70** (2018.01)

(52) Cooperative Patent Classification (CPC):
Y02B 30/70

(86) International application number:
**PCT/JP2024/025055**

(87) International publication number:
**WO 2025/018255 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023 JP 2023115680**

(71) Applicant: **Daikin Industries, Ltd.
Osaka-Shi, Osaka 530-0001 (JP)**

(72) Inventor: **GAMO, Satoshi
Osaka-Shi, Osaka 530-0001 (JP)**

(74) Representative: **Hoffmann Eitle
Patent- und Rechtsanwälte PartmbB
Arabellastraße 30
81925 München (DE)**

(54) **AIR CONDITIONING SYSTEM AND VENTILATION CONTROL METHOD**

(57)    In an air-conditioning system including a ventilator, in order to enable to ventilate for a minimum time and airflow, within a range in which the carbon dioxide concentration in the space to be ventilated does not exceed a predetermined value, the air-conditioning system includes a ventilator, and a control unit configured to control the ventilator, wherein the control unit is configured to acquire a carbon dioxide concentration in a space to be ventilated by the ventilator and adjust a rate of ventilation airflow of the ventilator based on a present value of the carbon dioxide concentration, and a variation over time of the carbon dioxide concentration.

FIG.2

EP 4 521 034 A1

**Description**

TECHNICAL FIELD

The disclosures herein relate to air-conditioning systems and ventilation control methods.

BACKGROUND ART

There is an air-conditioning system which controls an air conditioner and a ventilator to adjust a ventilation state in a room. For example, there is known a technology which detects carbon dioxide in the room, sets a ventilation processing mode which gives priority to a ventilation process when a carbon dioxide concentration is above a threshold concentration, and stops the air conditioner 1 and operates the ventilator 3 (e.g., see Patent Literature (PTL) 1.)

CITATION LIST

PATENT LITERATURE

PTL 1: Japanese Laid-Open Patent Publication No. 2000-088320

SUMMARY OF THE INVENTION

PROBLEM TO BE SOLVED BY THE INVENTION

In an air-conditioning system including a ventilator, there is a demand to ventilate for a minimum time and airflow, within a range in which the carbon dioxide concentration in the space to be ventilated does not exceed a predetermined value in order to save power.

However, in the related art as shown in PTL 1, for example, when the carbon dioxide concentration exceeds a threshold value, an operation of the ventilator is started or a rate of ventilation airflow is increased, and there is a problem that sufficient power saving cannot be realized.

The present disclosure provides the air-conditioning system including the ventilator which enables to ventilate for a minimum time and airflow, within a range in which the carbon dioxide concentration in the space to be ventilated does not exceed a predetermined value.

MEANS OF SOLVING THE PROBLEM

An air-conditioning system of a first aspect of the present disclosure includes a ventilator, and a control unit configured to control the ventilator, wherein the control unit is configured to acquire a carbon dioxide concentration in a space to be ventilated by the ventilator, and adjust a rate of ventilation airflow of the ventilator based on a present value of the carbon dioxide concentration, and a variation over time of the carbon dioxide concentration.

According to the air-conditioning system of the first aspect of the present disclosure, the air-conditioning system including the ventilator is configured to enable to ventilate for a minimum time and airflow, within a range in which the carbon dioxide concentration in the space to be ventilated does not exceed a predetermined value.

A second aspect of the present disclosure is the air-conditioning system according to the first aspect, wherein the control unit is configured to adjust the rate of ventilation airflow of the ventilator using the present value of the carbon dioxide concentration, a predetermined value that is a predetermined carbon dioxide concentration, and the variation over time of the carbon dioxide concentration. Thus, the air-conditioning system can reduce the rate of ventilation airflow with preventing the carbon dioxide concentration in the space to be ventilated from exceeding the predetermined value, using information of the variation over time of the carbon dioxide concentration.

A third aspect of the present disclosure is the air-conditioning system according to the first aspect, wherein the control unit is configured to adjust the rate of ventilation airflow of the ventilator using a difference between the present value of the carbon dioxide concentration and a predetermined value of the carbon dioxide concentration, and the variation over time of the carbon dioxide concentration. Thus, the air-conditioning system can reduce the rate of ventilation airflow with preventing the carbon dioxide concentration in the space to be ventilated from exceeding the predetermined value, using information of the difference between the present value of the carbon dioxide concentration and the predetermined value of the carbon dioxide concentration.

A fourth aspect of the present disclosure is the air-conditioning system according to the first aspect, wherein the control unit is configured to calculate an approach time for the carbon dioxide concentration to reach a predetermined value that is a predetermined carbon dioxide concentration based on the present value of the carbon dioxide concentration

and the variation over time of the carbon dioxide concentration, and adjust the rate of ventilation airflow of the ventilator based on the approach time. Thus, the air-conditioning system can reduce the rate of ventilation airflow with preventing the carbon dioxide concentration in a space to be ventilated from exceeding the predetermined value, using information of the approach time for the carbon dioxide concentration to reach the predetermined value that is the predetermined carbon dioxide concentration.

A fifth aspect of the present disclosure is the air-conditioning system according to the first and fourth aspects, wherein the control unit is configured to raise the rate of ventilation airflow of the ventilator by a first increase, when the present value of the carbon dioxide concentration is smaller than a first predetermined value of the carbon dioxide concentration and an approach time for the carbon dioxide concentration to reach the first predetermined value is within a first time.

A sixth aspect of the present disclosure is the air-conditioning system according to the fifth aspect, wherein the control unit is configured to raise the rate of ventilation airflow of the ventilator by a second increase larger than the first increase, when the approach time is within a second time shorter than the first time. Thus, the air-conditioning system can reduce the rate of ventilation airflow with preventing the carbon dioxide concentration in the space to be ventilated from exceeding the first predetermined value, even when the carbon dioxide concentration increases rapidly.

A seventh aspect of the present disclosure is the air-conditioning system according to the first and fourth aspects, wherein the control unit is configured to reduce the rate of ventilation airflow of the ventilator by a first decrease, when the present value of the carbon dioxide concentration is larger than a second predetermined value of the carbon dioxide concentration and an approach time for the carbon dioxide concentration to reach the second predetermined value is within a third time. Thus, the air-conditioning system can reduce the rate of ventilation airflow when the carbon dioxide concentration decreases rapidly.

An eighth aspect of the present disclosure is the air-conditioning system according to the seventh aspect, wherein the control unit is configured to reduce the rate of ventilation airflow of the ventilator by a second decrease larger than the first decrease, or to stop an operation of the ventilator, when the approach time is within a fourth time shorter than the third time.

A ninth aspect of the present disclosure is the air-conditioning system according to any one of the first to eighth aspects, wherein the control unit is configured to stop the operation of the ventilator, when the present value of the carbon dioxide concentration is a predetermined threshold or less.

A tenth aspect of the present disclosure is the air-conditioning system according to any one of the first to ninth aspects, wherein the air-conditioning system includes a plurality of ventilators, and the control unit is configured to adjust the rate of ventilation airflow of the plurality of ventilators based on the present value of the carbon dioxide concentration, and the variation over time of the carbon dioxide concentration.

An eleventh aspect of the present disclosure is the air-conditioning system according to any one of the first to tenth aspects, wherein the control unit is configured to determine the rate of ventilation airflow in a time interval longer than a time interval to measure the carbon dioxide concentration.

A twelfth aspect of the present disclosure is the air-conditioning system according to any one of the first to eleventh aspects, wherein the control unit is configured to calculate the variation over time of the carbon dioxide concentration by smoothing an acquired carbon dioxide concentration. Thus, the air-conditioning system can reduce a harmful effect by a variation of data of the carbon dioxide concentration.

A thirteenth aspect of the present disclosure is the air-conditioning system according to any one of the first to twelfth aspects, wherein the air-conditioning system includes the ventilator, and a communication device communicable with the ventilator, and wherein the communication device includes the control unit.

A ventilation control method of a fourteenth aspect of the present disclosure includes a ventilator and a control unit configured to control the ventilator, wherein the control unit is configured to acquire a carbon dioxide concentration in a space to be ventilated by the ventilator, and adjust a rate of ventilation airflow of the ventilator based on a present value of the carbon dioxide concentration and a variation over time of the carbon dioxide concentration.

A program of a fifteenth aspect of the present disclosure, in an air-conditioning system including a ventilator and a control unit configured to control the ventilator, is configured to cause the control unit to acquire a carbon dioxide concentration in a space to be ventilated by the ventilator, and adjust a rate of ventilation airflow of the ventilator based on a present value of the carbon dioxide concentration and a variation over time of the carbon dioxide concentration.

BRIEF DESCRIPTION OF THE DRAWINGS

[FIG. 1] FIG. 1 is a drawing 1 illustrating an example of a configuration of an air-conditioning system according to the present embodiment.
[FIG. 2] FIG. 2 is a drawing describing an outline of a process according to the present embodiment.

[FIG. 3] FIG. 3 is a drawing 2 illustrating an example of the configuration of the air-conditioning system according to the present embodiment.

[FIG. 4] FIG. 4 is a drawing 3 illustrating an example of the configuration of the air-conditioning system according to the present embodiment.

[FIG. 5] FIG. 5 is a drawing illustrating an example of a hardware configuration of a computer according to the present embodiment.

[FIG. 6] FIG. 6 is a flowchart illustrating an example of a ventilation airflow rate adjustment process according to the present embodiment.

[FIG. 7A] FIG. 7A is a drawing 1 describing the ventilation airflow rate determination process according to example 1.

[FIG. 7B] FIG. 7B is a drawing 2 describing the ventilation airflow rate determination process according to example 1.

[FIG. 7C] FIG. 7C is a drawing 3 describing the ventilation airflow rate determination process according to example 1.

[FIG. 8A] FIG. 8A is a drawing 1 describing the ventilation airflow rate determination process according to example 2.

[FIG. 8B] FIG. 8B is a drawing 2 describing the ventilation airflow rate determination process according to example 2.

[FIG. 9] FIG. 9 is a drawing 3 describing the ventilation airflow rate determination process according to example 2.

[FIG. 10] FIG. 10 is a drawing 1 describing the ventilation airflow rate determination process according to example 3.

[FIG. 11A] FIG. 11A is a drawing 2 describing the ventilation airflow rate determination process according to example 3.

[FIG. 11B] FIG. 11B is a drawing 3 describing the ventilation airflow rate determination process according to example 3.

[FIG. 11C] FIG. 11C is a drawing 4 describing the ventilation airflow rate determination process according to example 3.

[FIG. 12] FIG. 12 is a flowchart 1 illustrating the example of a ventilation airflow rate adjustment process according to example 4.

[FIG. 13] FIG. 13 is a drawing describing the ventilation airflow rate adjustment process according to example 4.

[FIG. 14] FIG. 14 is a flowchart 2 illustrating an example of the ventilation airflow rate adjustment process according to example 4.

[FIG. 15] FIG. 15 is a drawing describing an effect of the air-conditioning system according to the present embodiment.

DESCRIPTION OF EMBODIMENTS

In the following, embodiments of the present invention (the present embodiment) will be described with reference to the accompanying drawings. In the description and drawings according to the present embodiments, the same constituent elements are denoted with the same reference numerals, and redundant description thereabout may be omitted.

<CONFIGURATION OF AIR-CONDITIONING SYSTEM>

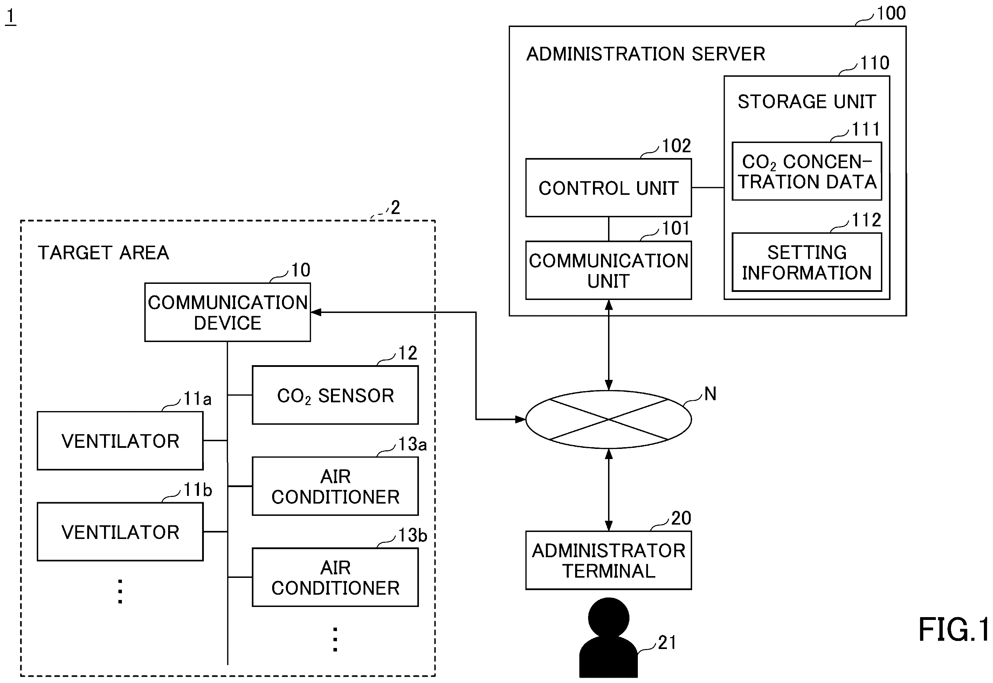

FIG. 1 is a drawing 1 illustrating an example of a configuration of an air-conditioning system according to the present embodiment. In the example of FIG. 1, the air-conditioning system 1 includes a communication device 10, ventilators 11a, 11b, ..., a $CO_2$ sensor 12, and an administration server 100 capable of communicating with the communication device 10 via a communication network N. The air-conditioning system 1 may also include air conditioners 13a, 13b, ..., and an administrator terminal 20. In the following description, when any of the ventilators 11a, 11b, ..., is referred to, a term "ventilator 11" is used. When any of the air conditioners 13a, 13b, ..., is referred to, a term "air conditioner 13" is used.

The ventilator 11 is a ventilator to ventilate a target area 2. A number of ventilators 11 shown in FIG. 1 is an example, and the number of ventilators 11 may be another number which is one or greater. The target area 2 is an example of a space to be ventilated by the ventilator 11.

The $CO_2$ sensor 12 is a sensor to measure the carbon dioxide concentration (hereinafter referred to as $CO_2$ concentration) in the target area 2. Alternatively, the $CO_2$ sensor 12 may be provided in the target area 2, or may be provided in a space through which air suctioned from the target area 2 passes. Alternatively, the $CO_2$ sensor 12 may be provided in the ventilator 11, or may be provided in the air conditioner 13.

The air conditioner 13 is an air conditioner to air-condition the target area 2. The number of air conditioners 13 shown in FIG. 1 is an example, and the number of air conditioners 13 may be another number which is one or more. In the present embodiment, the air conditioner 13 is optional and not essential.

The communication device 10 is an information processor having a computer configuration, and is communicatively connected to, for example, the ventilator 11, the $CO_2$ sensor 12, and the air conditioner 13. The communication device 10 can communicate with, for example, the administration server 100 or the administrator terminal 20, etc., via the Internet or a communication network N such as a LAN (Local Area Network). The communication device 10 acquires, for example, measurement data of the $CO_2$ concentration in the target area 2 measured by the $CO_2$ sensor 12, operation data of the ventilator 11, operation data of the air conditioner, and the like, and transmits them to the administration server 100. The communication device 10 transfers control data addressed to the ventilator 11, control data addressed to the air conditioner 13, and the like, received from the administration server 100, to the ventilator 11 and the air conditioner 13.

The administration server 100 is a system including the information processor having the computer configuration, or a plurality of computers. In the example of FIG. 1, the administration server 100 includes a communication unit 101, a control unit 102, a storage unit 110, and the like.

The communication unit 101 connects the administration server 100 to the communication network N and executes a communication process to communicate with the communication device 10, the administrator terminal 20, and the like.

The control unit 102 is a processor such as a CPU (Central Processing Unit) provided in the administration server 100. The control unit 102 acquires the $CO_2$ concentration in the target area 2 by executing a program stored in a storage medium such as the storage unit 110, and executes a ventilation airflow rate adjustment process to adjust the rate of ventilation airflow of the ventilator 11 based on the present value of the $CO_2$ concentration and the variation over time of the $CO_2$ concentration.

The storage unit 110 is realized by a storage device or the like provided in the administration server 100, and stores various data, information, programs and the like including, for example, data of the $CO_2$ concentration ($CO_2$ concentration data 111) acquired by the control unit 102 and various setting information 112 and the like. The storage unit 110 may be realized by another server capable of communicating with the administration server 100 via the communication network N, or cloud storage or the like.

The administrator terminal 20 is, for example, an information processing device such as a PC, a tablet terminal, or a smartphone used by an administrator 21 administrating the air-conditioning system 1. The administrator 21 can log in to the administration server 100 by using the administrator terminal 20, for example, to set or change the setting information 112. In the present embodiment, the administrator terminal 20 is optional and not essential.

<OUTLINE OF PROCESS>

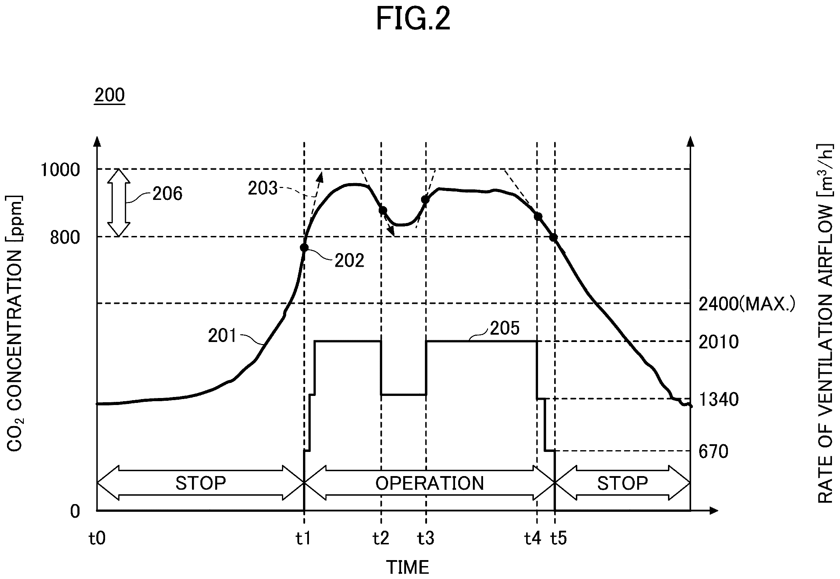

FIG. 2 is a drawing describing the outline of a process according to the present embodiment. The drawing is an example of variation of the $CO_2$ concentration 201 over time in the target area 2, where the horizontal axis is time and the left vertical axis is the $CO_2$ concentration [ppm]. The drawing is also an example of control of the rate of ventilation airflow 205 of the ventilator 11 by the control unit 102, where the horizontal axis is time and the right vertical axis is the rate of ventilation airflow [$m^3$/h].

The $CO_2$ concentration (carbon dioxide concentration) is a ratio of carbon dioxide contained in 1 $m^3$. The $CO_2$ concentration in outside air is approximately 400 ppm, and a standard of indoor carbon dioxide concentration is, for example, 1000 ppm or less.

When the ventilator 11 is stopped, the $CO_2$ concentration in the target area 2 rises, for example, as shown by time t0 to t1 in FIG. 2 due to human respiration. The variation of the $CO_2$ concentration 201 over time depends on the number of people in the target area 2.

Therefore, for example, based on the present value 202 of the $CO_2$ concentration 201 in the target area 2 and the slope (variation over time) 203 of the $CO_2$ concentration 201, the control unit 102 adjusts the rate of ventilation airflow of the ventilator 11 so that the $CO_2$ concentration 201 becomes within the range 206 from the first predetermined value (e.g., 1000 ppm) to the second predetermined value (e.g., 800 ppm).

For example, based on the present value 202 of the $CO_2$ concentration 201 and the slope 203 of the $CO_2$ concentration 201, at time t1 in FIG. 2, the control unit 102 starts the operation of the ventilator 11 when the $CO_2$ concentration 201 is likely to exceed the first predetermined value.

Preferably, the control unit 102 stepwise controls the rate of ventilation airflow of the ventilator 11 based on the present value 202 of the $CO_2$ concentration 201 and the slope 203 of the $CO_2$ concentration 201. For example, when the $CO_2$ concentration 201 reaches the first predetermined value in a shorter time, the control unit 102 sets the rate of ventilation airflow of the ventilator 11 to be larger.

Note that the $CO_2$ concentration 201 of the target area 2 varies depending on the number of people in the target area 2 even if the same rate of ventilation airflow is used. For example, it is assumed that the number of people in the target area 2 decreases and the $CO_2$ concentration 201 in the target area 2 decreases after versus before time t2 in FIG. 2. In this case, for example, at time t2 in FIG. 2, the control unit 102 decreases the rate of ventilation airflow of the ventilator 11 when, based on the present value of the $CO_2$ concentration 201 and the slope of the $CO_2$ concentration 201, the $CO_2$ concentration 201 is likely to fall below the second predetermined value. In the example of FIG. 2, the control unit 102 decreases the rate of ventilation airflow of the ventilator 11 by one step at time t2.

Similarly, the control unit 102 increases the rate of ventilation airflow of the ventilator 11 again when, based on the present value of the $CO_2$ concentration 201 and the slope of the $CO_2$ concentration 201, the $CO_2$ concentration 201 is likely to exceed the first predetermined value at time t3 in FIG. 2. In the example of FIG. 2, the control unit 102 increases the rate of ventilation airflow of the ventilator 11 by one step at time t3.

Similarly, the control unit 102 decreases the rate of ventilation airflow of the ventilator 11 again when, based on the present value of the $CO_2$ concentration 201 and the slope of the $CO_2$ concentration 201, the $CO_2$ concentration 201 is likely to fall below the second predetermined value at time t4 in FIG. 2. In the example of FIG. 2, the control unit 102 decreases the rate of ventilation airflow of the ventilator 11 by one step at time t4.

Further, for example, at time t5 in FIG. 2, the control unit 102 stops the operation of the ventilator 11 when the $CO_2$ concentration 201 falls below the second predetermined value based on the present value of the $CO_2$ concentration 201 and the slope of the $CO_2$ concentration 201 and continues to decrease.

For example, in a related art as shown in PTL 1, the operation of the ventilator is started when the $CO_2$ concentration exceeds a threshold value. However, in this method, for example, when the $CO_2$ concentration exceeds the threshold value, the operation of the ventilator is started even when the $CO_2$ concentration increases slowly and does not reach 1000 ppm.

Conversely, in the present embodiment, the operation of the ventilator 11 is started when the $CO_2$ concentration 201 is likely to exceed 1000 ppm (an example of the first predetermined value) based on the present value 202 of the $CO_2$ concentration 201 and the slope 203 of the $CO_2$ concentration 201. Therefore, according to the air-conditioning system 1 according to the present embodiment, unnecessary operation of the ventilator 11 can be suppressed. For example, the air-conditioning system 1 can delay the operation start time of the ventilator 11 until the last possible moment.

Moreover, the air-conditioning system 1 can reduce the rate of ventilation airflow with preventing the $CO_2$ concentration in the space to be ventilated from exceeding the predetermined value, using information of any one of: the variation over time of the $CO_2$ concentration; the difference between the predetermined value and the $CO_2$ concentration; or the approach time for the $CO_2$ concentration to reach the predetermined value. The air-conditioning system 1 can reduce the rate of ventilation airflow with preventing the $CO_2$ concentration in the space to be ventilated from exceeding the predetermined value, by changing the amount by which the rate of ventilation airflow is increased according to the approach time for the $CO_2$ concentration to reach the predetermined concentration.

Further, in the related art, when the $CO_2$ concentration exceeds the threshold value, the operation of the ventilator 11 is continued even if the $CO_2$ concentration tends to decrease. Conversely, in the present embodiment, when the $CO_2$ concentration exceeds 800 ppm (an example of the second predetermined value) but the $CO_2$ concentration tends to decrease, the rate of ventilation airflow of the ventilator 11 is decreased or the operation of the ventilator 11 is stopped. Therefore, according to the air-conditioning system 1 according to the present embodiment, unnecessary operation of the ventilator 11 can be further suppressed.

As described above, the air-conditioning system 1 according to the present embodiment enables to ventilate for a minimum required time and airflow within a range in which the carbon dioxide concentration in the space to be ventilated (target area 2) does not exceed a predetermined value.

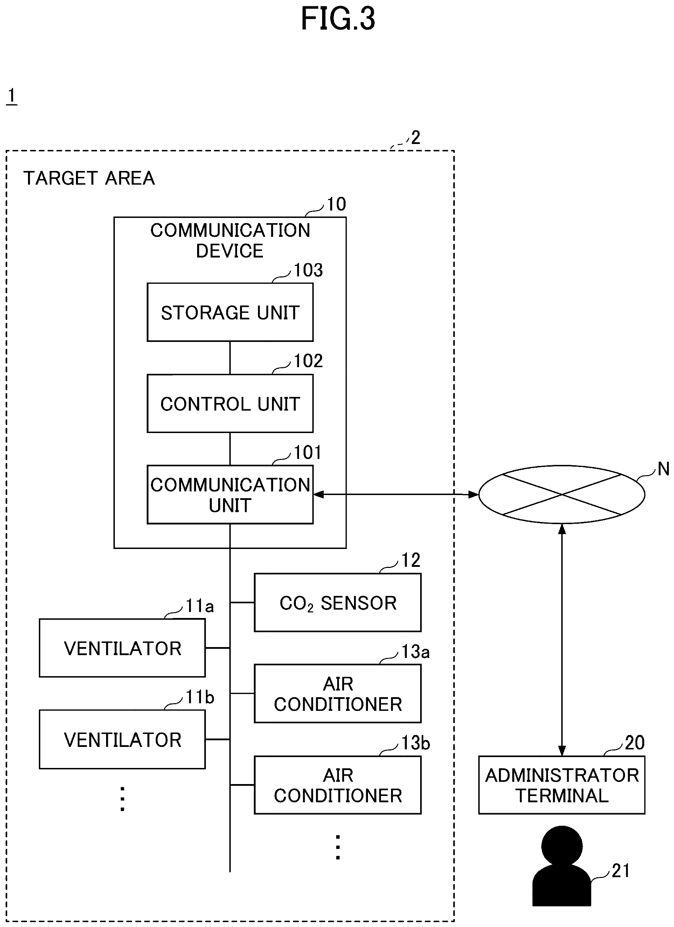

The configuration of the air-conditioning system 1 shown in FIG. 1 is an example. For example, as shown in FIG. 3, the communication device 10 may have the communication unit 101, the control unit 102, the storage unit 110, and the like of the administration server 100 in FIG. 1. Thus, the air-conditioning system 1 can adjust the rate of ventilation airflow of the ventilator 11 so that the $CO_2$ concentration 201 falls within the range 206 of the predetermined value based on the present value of the $CO_2$ concentration 201 in the target area 2 and the variation over time of the $CO_2$ concentration 201 without depending on the administration server 100.

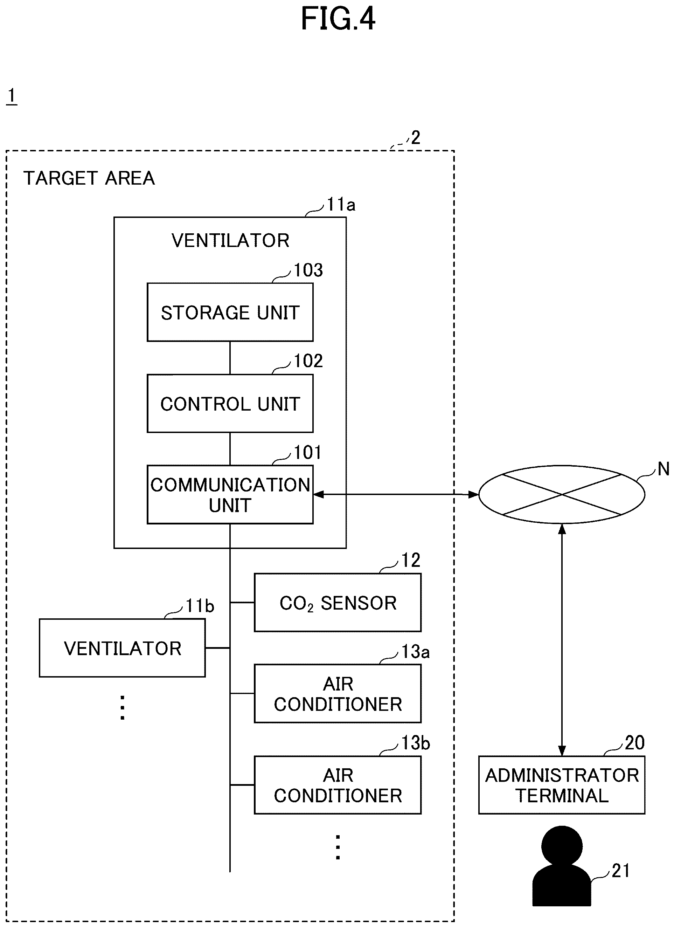

Alternatively, the communication unit 101, the control unit 102, the storage unit 110 and the like may be provided in the ventilator 11 as shown in FIG. 4. Thus, the air-conditioning system 1 can adjust the rate of ventilation airflow of the ventilator 11 so that the $CO_2$ concentration 201 falls within the range 206 of the predetermined value based on the present value of the $CO_2$ concentration 201 in the target area 2 and the variation over time of the $CO_2$ concentration 201 without depending on the communication device 10.

Further alternatively, the communication unit 101, the control unit 102, the storage unit 110 and the like may be distributed among the administration server 100, the communication device 10, the ventilator 11 and the like. That is, the communication unit 101, the control unit 102, the storage unit 110 and the like may be provided in the air-conditioning system 1 and may be provided in any device in the air-conditioning system 1.

<HARDWARE CONFIGURATION>

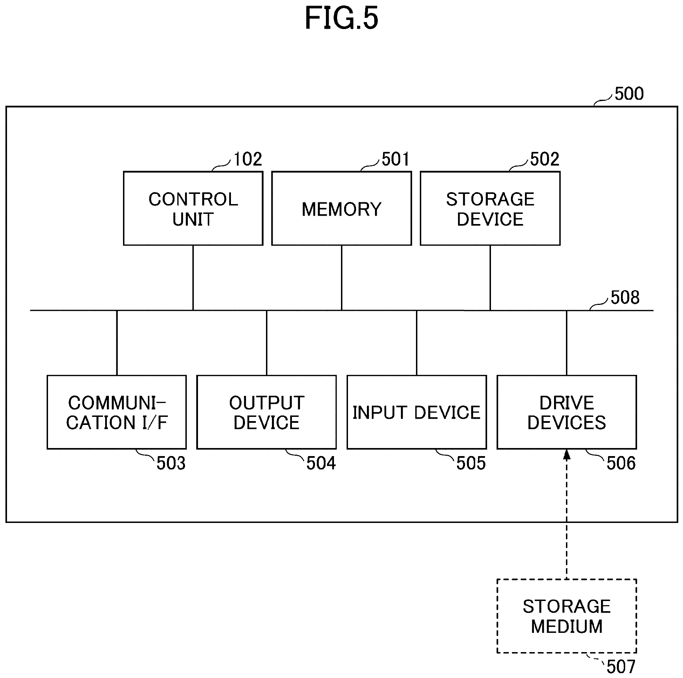

The administration server 100, the communication device 10, the administrator terminal 20 and the like have, for example, the hardware configuration of the computer 500 as shown in FIG. 5. Alternatively, the administration server 100 may be composed of a plurality of computers 500. Alternatively, the ventilator 11 may have a hardware configuration of the computer 500.

FIG. 5 is a drawing illustrating an example of the hardware configuration of a computer according to the present embodiment. The computer 500 includes, for example, a control unit 102, a memory 501, a storage device 502, a communication interface (I/F) 503, an output device 504, an input device 505, and a drive device 506, and other such components.

The control unit 102 is, for example, a processor such as a CPU to realize various functions by executing a predetermined program stored in a storage medium such as the storage device 502 or the memory 501. In addition to the CPU, the control unit 102 may also include a processor, for example, a GPU (Graphics Processing Unit) or a DSP (Digital Signal Processor).

The memory 501 includes, for example, a RAM (Random Access Memory) that is a volatile memory used as a work area of the control unit 102 and a ROM (Read Only Memory) that is a nonvolatile memory to store a program to start the control unit 102. The storage device 502 is a non-volatile, large-capacity storage device to store programs such as an OS (Operating System), applications, and various types of data.

The communication I/F 503 includes various communication interfaces to communicate with other devices. For example, the communication I/F 503 includes a NIC (Network Interface Card) to connect the computer 500 to the communication network N, or a wireless communication interface to communicate via wireless WAN (Wide Area Network) or wireless LAN.

The output device 504 is, for example, such as a display, a speaker, or an LED (Light Emitting Diode) to output to the outside. The input device 505 is, for example, such as a touch panel, a keyboard, or a pointing device to receive an input from the outside. The output device 504 and the input device 505 may be, for example, a display input device such as a touch panel display.

The drive device 506 is a device to connect the storage medium (recording medium) 507 to the computer 500. The storage medium 507 includes a medium to record information optically, electrically, or magnetically, for example, a CD-ROM, a flexible disk, a magneto-optical disk, or the like. The storage medium 507 may include a semiconductor memory for electrically recording information, for example, a ROM, a flash memory, or the like. The bus 508 is commonly connected to the above-mentioned components and transmits, for example, an address signal, a data signal, and various control signals.

<FLOW OF PROCESS>

Next, a flow of process of the ventilation control method according to the present embodiment will be described.

(VENTILATION AIRFLOW RATE ADJUSTMENT PROCESS)

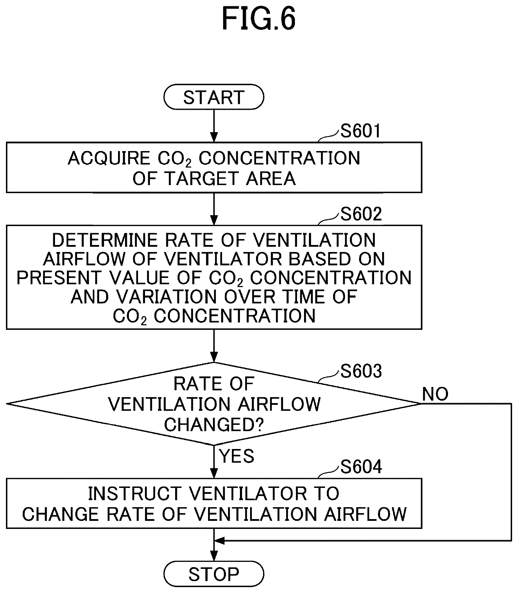

FIG. 6 is a flowchart illustrating an example of ventilation airflow rate adjustment process according to the present embodiment. This process shows an example of the ventilation airflow rate adjustment executed by the air-conditioning system 1.

In step S601, the control unit 102 acquires the $CO_2$ concentration (carbon dioxide concentration) of the target area 2. The target area 2 is an example of a space to be ventilated by the ventilator 11.

Preferably, the control unit 102 acquires the $CO_2$ concentration data 111 of the target area 2 measured by the $CO_2$ sensor 12 at a first time interval (e.g., every one minute), and uses a moving average of the $CO_2$ concentration during a predetermined period (e.g., ten minutes before the present time) as the $CO_2$ concentration in the target area 2. Thus, for example, adverse effects due to fluctuations in the $CO_2$ concentration data 111 of the target area 2 can be reduced.

The moving average is an example of a process to smooth the $CO_2$ concentration data 111. The control unit 102 may use a method different from the moving average to smooth the $CO_2$ concentration data 111. Further, the predetermined time interval (one minute) and the predetermined period (ten minutes) are examples, and alternatively, other values may be used.

Alternatively, the control unit 102 may acquire the $CO_2$ concentration data 111 of the target area 2 measured at a predetermined time interval from the storage unit 110 or from the communication device 10. Moreover, alternatively, the control unit 102 may acquire the $CO_2$ concentration data 111 of the target area 2 from a cloud service that acquires and administrates measurement results from the $CO_2$ sensor 12 or from the $CO_2$ sensor 12. The control unit 102 determines the present value of the $CO_2$ concentration in the target area 2 as the value acquired by smoothing the $CO_2$ concentration data 111 of the target area 2 before the process of step S602 or the $CO_2$ concentration data 111 of the target area 2 measured at a predetermined time interval by a method such as a moving average.

In step S602, the control unit 102 determines the rate of ventilation airflow of the ventilator 11 based on the present value of the $CO_2$ concentration in the target area 2 and the variation over time of the $CO_2$ concentration in the target area 2.

Preferably, the control unit 102 executes the ventilation airflow rate determination process to determine the rate of ventilation airflow of the ventilator 11 at a second time interval (e.g., every five minutes) longer than the first time interval based on the $CO_2$ concentration in the target area 2 acquired at the first time interval (e.g., every one minute). The ventilation airflow rate determination process will be described later by exemplifying a plurality of embodiments.

In step S603, the control unit 102 determines whether the newly determined rate of ventilation airflow is changed from the previous rate of ventilation airflow by the determination in step S602. If the rate of ventilation airflow is changed, the control unit 102 proceeds to step S604. Conversely, if the rate of ventilation airflow is not changed, the control unit 102 ends the process in FIG. 6.

In step S604, the control unit 102 instructs the ventilator 11 to change the rate of ventilation airflow. In the example in FIG. 1, the control unit 102 transmits control data instructing the ventilator 11 whose rate of ventilation airflow has been changed to change the rate of ventilation airflow to the communication device 10. In response, the communication device 10 transfers the control data received from the administration server 100 to the ventilator 11, and the ventilator 11 changes the rate of ventilation airflow according to the transferred control data. The change of the rate of ventilation airflow includes starting or stopping the operation of the ventilator 11.

(VENTILATION AIRFLOW RATE DETERMINATION PROCESS)

Subsequently, the ventilation airflow rate determination process executed by the control unit 102 in step S602 of FIG. 6 will be described.

[EXAMPLE 1]

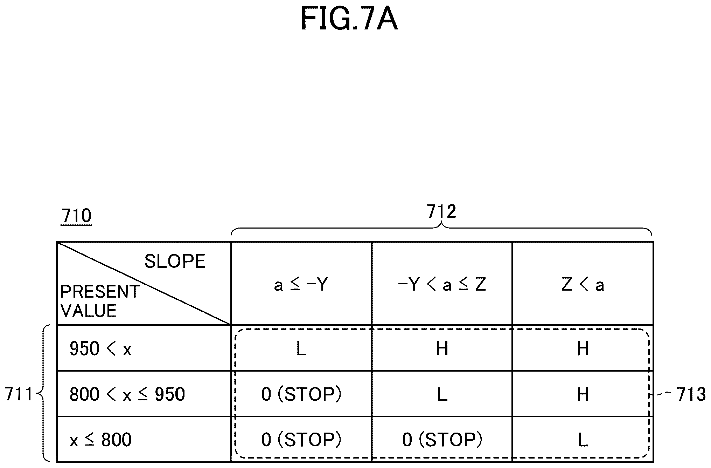

FIGS. 7A to 7C are drawings describing the ventilation airflow rate determination process according to example 1. For example, as shown in FIG. 7A, the control unit 102 may determine the rate of ventilation airflow of the ventilator 11 by using the present value 711 of the $CO_2$ concentration and the corresponding information 710 in which the rate of ventilation airflow 713 of the ventilator 11 corresponding to the slope 712 of the $CO_2$ concentration is stored in advance.

In the example of the corresponding information 710, the rate of ventilation airflow 713 of the ventilator 11 is referred to in three steps: "0 (stop)", "L", and "H". Here, "0 (stop)" refers to that the operation of the ventilator 11 is stopped. "L" refers to that the ventilator 11 is operated weakly, and "H" refers to that the ventilator 11 is operated strongly. Further, in the corresponding information 710, "-Y" is a threshold value of a negative slope (e.g., "-2"), and "Z" is a threshold value of a positive slope (e.g., "8"). For example, when the present value x of the $CO_2$ concentration in the target area 2 is 850 ppm and the slope a of the $CO_2$ concentration in the target area 2 is a value between -Y and Z (e.g., "1"), the control unit 102 can determine the rate of ventilation airflow of the ventilator 11 to be "L" from the corresponding information 710.

Here, the slope a is acquired by calculating the difference between "the present value of the $CO_2$ concentration at the present time" and "the present value of the $CO_2$ concentration one minute before the present time". For example, the control unit 102 calculates the slope a by the following formula 1.

$$\text{Slope } a = (\text{moving average of the } CO_2 \text{ concentration at the present time}) - (\text{moving average of the } CO_2 \text{ concentration one minute before the present time}) \cdots \qquad \text{(formula 1)}$$

The moving average of the $CO_2$ concentration at the present time is calculated by averaging the $CO_2$ concentration for ten minutes from the present time to ten minutes before the present time, for example. Similarly, the moving average of the $CO_2$ concentration one minute before the present time is calculated by averaging the $CO_2$ concentration for ten minutes from one minute to eleven minutes before the present time. Alternatively, the "present value" may be a moving average as shown in formula 1, a value smoothed by another method, or the $CO_2$ concentration data 111 measured by the $CO_2$ sensor 12 may be used. The "present value of the $CO_2$ concentration one minute before the present time" is an example for calculating the slope a, and a difference between the present value of the $CO_2$ concentration predetermined time before the present time (e.g., thirty seconds, one minute, five minutes, etc.) can be used.

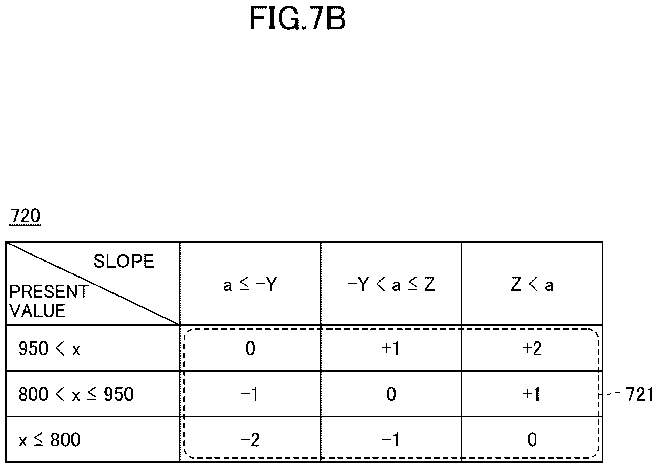

As another example, in the corresponding information 720 shown in FIG. 7B, the rate of ventilation airflow 721 of the ventilator 11 is referred to in five steps of "-2", "-1", "0", "+1", and "+2". Here, "-2" refers to that the ventilation airflow rate level of the ventilator 11 is reduced by two steps, and "-1" refers to that the ventilation airflow rate level of the ventilator 11 is reduced by one step. "0" refers to that the ventilation airflow rate level of the ventilator 11 is not changed. "+1" refers to that the ventilation airflow rate level of the ventilator 11 is raised by one step, and "+2" refers to that the ventilation airflow rate level of the ventilator 11 is raised by two steps. When the ventilation airflow rate level after the change exceeds the maximum value, the control unit 102 sets the ventilation airflow rate level of the ventilator 11 to the maximum value. Similarly, when the ventilation airflow rate level after the change falls below the minimum value, the control unit 102 sets the ventilation airflow rate level of the ventilator 11 to the minimum value.

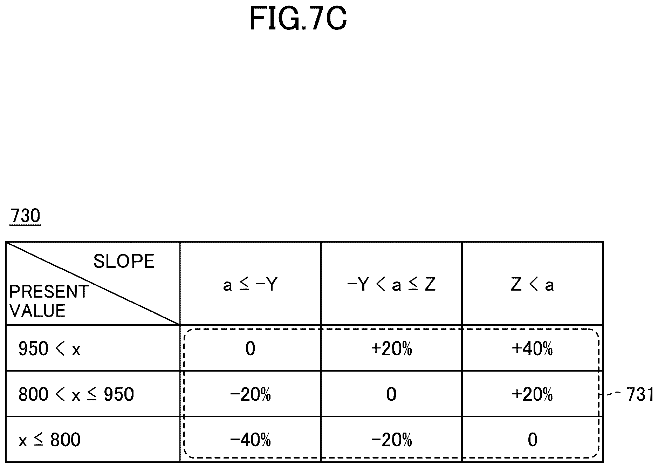

As another example, in the corresponding information 730 shown in FIG. 7C, the rate of ventilation airflow 731 of the ventilator 11 is referred to in five steps of "-40%", "-20%", "0", "+20%", and "+40%". Here, "-40%" refers to that the rate of ventilation airflow of the ventilator 11 is reduced by 40%, and "-20%" refers to that the rate of ventilation airflow of the ventilator 11 is reduced by 20%. "0" refers to that the rate of ventilation airflow of the ventilator 11 is not changed. "+20%" refers to that the rate of ventilation airflow of the ventilator 11 is increased by 20%, and "+40%" refers to that the rate of ventilation airflow of the ventilator 11 is increased by 40%. If the rate of ventilation airflow after the change exceeds the maximum value, the control unit 102 sets the rate of ventilation airflow of the ventilator 11 to the maximum value. Similarly, if the rate of ventilation airflow after the change falls below the minimum value, the control unit 102 sets the rate of ventilation airflow of the ventilator 11 to the minimum value.

The corresponding information 710, 720, and 730 are included in the setting information 112 stored in advance in the air-conditioning system 1, for example. The setting values of the corresponding information 710, 720, and 730 may be changed by the administrator 21 or the like using the administrator terminal 20.

[EXAMPLE 2]

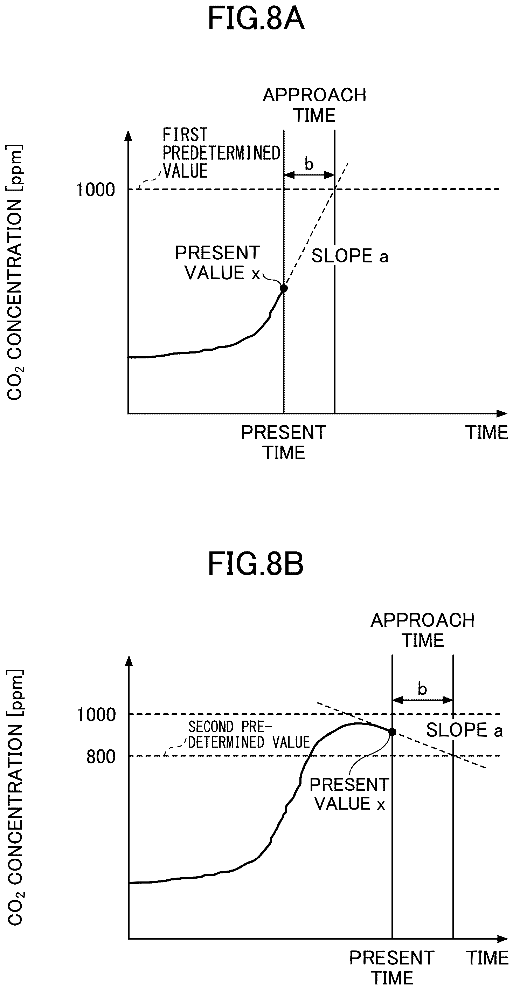

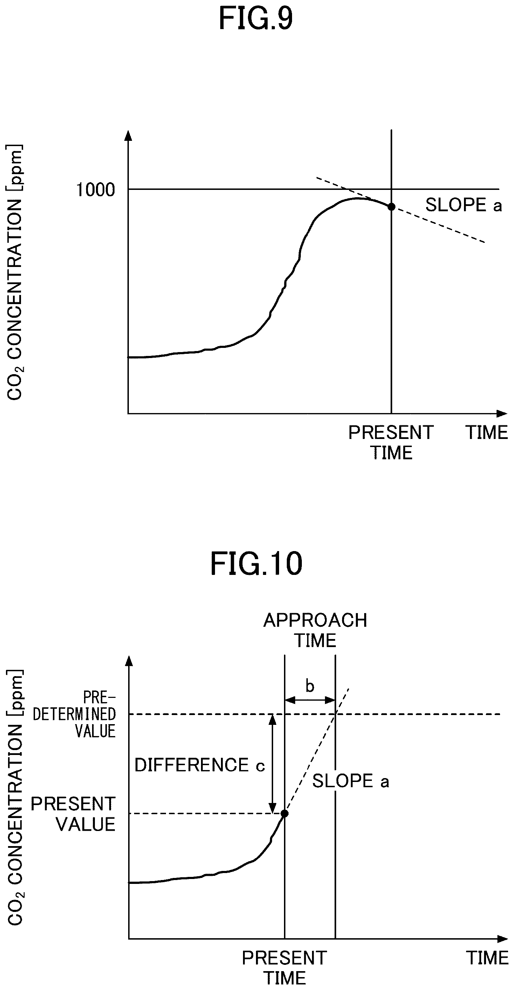

FIGS. 8A, 8B, and 9 are drawings describing the ventilation airflow rate determination process according to example 2. For example, as shown in FIG. 8A, when the slope a of the $CO_2$ concentration is "a > 0", the control unit 102 may determine the rate of ventilation airflow of the ventilator 11 based on the approach time b for the $CO_2$ concentration in the target area 2 to reach the first predetermined value (e.g., 1000 ppm).

The slope a of the $CO_2$ concentration can be calculated, for example, by subtracting the moving average of the $CO_2$ concentration one minute before the present time from the moving average of the $CO_2$ concentration at the present time. The approach time b for the $CO_2$ concentration in the target area 2 to reach the first predetermined value can be calculated, for example, by the following formula 2 from the present $CO_2$ concentration x and the slope a of the $CO_2$ concentration.

$$\texttt{Approach time b = 1/a × (1000 - x) ··· (formula 2)}$$

For example, when the slope a of the $CO_2$ concentration is "a > 0", the control unit 102 controls the rate of ventilation airflow of the ventilator 11 based on the approach time b as follows.

When the approach time b is less than a predetermined first time T1 (e.g., twenty minutes) and larger than or equal to a predetermined second time T2 (e.g., ten minutes), the control unit 102 raises the ventilation airflow rate level of the ventilator 11 by one step.

When the approach time b is less than the second time T2 and larger than or equal to a predetermined third time T3 (e.g., five minutes), the control unit 102 raises the ventilation airflow rate level of the ventilator 11 by two steps.

When the approach time is less than the third time T3, the control unit 102 raises the ventilation airflow rate level of the ventilator 11 by three steps. When the ventilation airflow rate level of the ventilator 11 exceeds the maximum level by the above control, the control unit 102 sets the ventilation airflow rate level of the ventilator 11 to the maximum level.

Here, as an example, the control unit 102 controls the rate of ventilation airflow of the ventilator 11 every five minutes, and the first time T1 is set to twenty minutes, or five minutes times four. The second time T2 is set to ten minutes, or five minutes times two, and the third time T3 is set to 5 minutes. However, the first time T1, the second time T2, and the third time T3 are examples, and alternatively, may be other values.

Thus, when the $CO_2$ concentration in the target area 2 reaches the first predetermined value in a shorter time, the control unit 102 preferably sets the rate of ventilation airflow of the ventilator 11 to a larger value.

Preferably, when the $CO_2$ concentration in the target area 2 exceeds a predetermined threshold value (e.g., 700 ppm), the control unit 102 executes the process to increase the rate of ventilation airflow of the ventilator 11. Alternatively, when the $CO_2$ concentration in the target area is less than a predetermined threshold value, the control unit 102 stops the operation of the ventilator 11.

Further, for example, as shown in FIG. 8B, when the slope a of the $CO_2$ concentration is "a ≤ 0", the control unit 102 may determine the rate of ventilation airflow of the ventilator 11 based on the approach time b for the $CO_2$ concentration in the target area 2 to reach a second predetermined value (e.g., 800 ppm).

For example, when the slope a of the $CO_2$ concentration is "a ≤ 0", the control unit 102 controls the rate of ventilation airflow of the ventilator 11 based on the approach time b as follows.

When the approach time b is less than a predetermined fourth time T4 (e.g., twenty minutes) and larger than or equal to a predetermined fifth time T5 (e.g., ten minutes), the control unit 102 decreases the ventilation airflow rate level of the ventilator 11 by one step.

When the approach time b is less than the fifth time T5 and larger than or equal to a predetermined sixth time T6 (e.g., five minutes), the control unit 102 lowers the ventilation airflow rate level of the ventilator 11 by two steps.

When the approach time is less than the sixth time T6, the control unit 102 lowers the ventilation airflow rate level of the ventilator 11 by three steps. When the ventilation airflow rate level of the ventilator 11 falls below the minimum level by the above control, the control unit 102 sets the ventilation airflow rate level of the ventilator 11 to the minimum level or stops the operation of the ventilator 11.

Here, as an example, the fourth time T4 is twenty minutes, the fifth time T5 is ten minutes, and the sixth time is five minutes. However, the fourth time T4, the fifth time T5, and the sixth time T6 are examples and may be other values.

Thus, when the $CO_2$ concentration in the target area 2 reaches the second predetermined value in a shorter time, the control unit 102 preferably sets the rate of ventilation airflow of the ventilator 11 to a smaller value.

As another example, for example, as shown in FIG. 9, when the inclination a of the $CO_2$ concentration is "$a \leq 0$", the control unit 102 may determine the rate of ventilation airflow of the ventilator 11 based on the inclination a of the $CO_2$ concentration in the target area 2.

For example, when the inclination a of the $CO_2$ concentration is "$a \leq 0$", the control unit 102 controls the rate of ventilation airflow of the ventilator 11 based on the inclination a as follows.

When the slope b is less than a predetermined first inclination Y1 (e.g., -2 = -20 ppm / 10 min) and larger than or equal to a predetermined second inclination Y2 (e.g., -5 = -50 ppm / 10 min), the control unit 102 decreases the ventilation airflow rate level of the ventilator 11 by one step.

When the slope b is less than a second inclination Y2, or when the $CO_2$ concentration in the target area 2 is less than a predetermined threshold value (e.g., 700 ppm), the control unit 102 decreases the ventilation airflow rate level of the ventilator 11 by two steps.

When the ventilation airflow rate level of the ventilator 11 falls below the minimum level by the above control, the control unit 102 sets the ventilation airflow rate level of the ventilator 11 to the minimum level or stops the operation of the ventilator 11.

Preferably, when the $CO_2$ concentration in the target area 2 is equal to or less than the first predetermined value (e.g., 1000 ppm), the control unit 102 executes the process to reduce the rate of ventilation airflow of the ventilator 11.

[EXAMPLE 3]

FIG. 10 is a drawing 1 describing the ventilation airflow rate determination process according to example 3. The control unit 102 may adjust the rate of ventilation airflow of the ventilator 11 using, for example, a difference c between the present value of the $CO_2$ concentration in the target area 2 and the predetermined value of the $CO_2$ concentration (e.g., 1000 ppm) and a slope (variation over time) a of the $CO_2$ concentration.

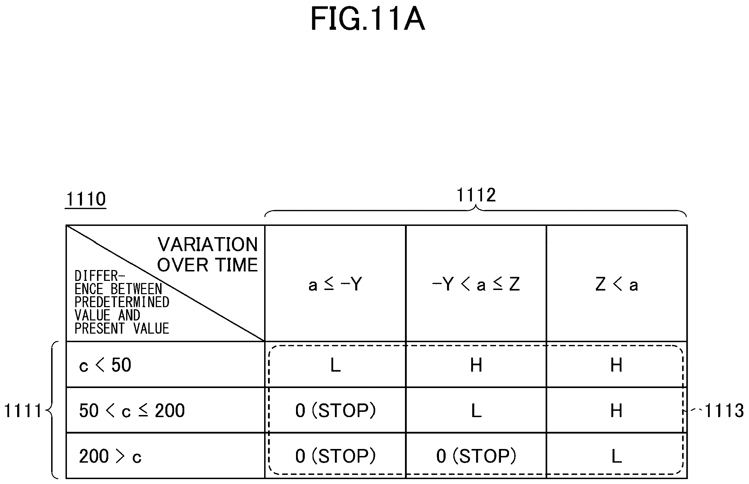

FIGS. 11A-C are drawings 2 to 4 describing a ventilation airflow rate determination process according to example 3. For example, as shown in FIG. 11A, the control unit 102 may determine the rate of ventilation airflow of the ventilator 11 using corresponding information 1110 in which the rate of ventilation airflow 1113 of the ventilator 11 corresponding to the difference 1111 between the predetermined value of the $CO_2$ concentration and the present value of the $CO_2$ concentration and the slope 1112 of the $CO_2$ concentration are stored in advance.

In the example of corresponding information 1110, the rate of ventilation airflow 1113 of the ventilator 11 is referred to in three steps of "0 (stop)", "L", and "H". Here, "0 (stop)" refers to that the operation of the ventilator 11 is stopped. "L" refers to that the ventilator 11 is operated weakly, and "H" indicates that the ventilator 11 is operated strongly. Further, in the corresponding information 1110, "-Y" refers to a threshold value of a negative slope (e.g., "-2"), and "Z" refers to a threshold value of a positive slope (e.g., "8"). For example, if the difference c between the predetermined value of the $CO_2$ concentration and the present value of the $CO_2$ concentration is 100, and the slope a of the $CO_2$ concentration is a value between Y and Z (e.g., "5"), the control unit 102 can determine the rate of ventilation airflow of the ventilator 11 to be "L" from the corresponding information 1110.

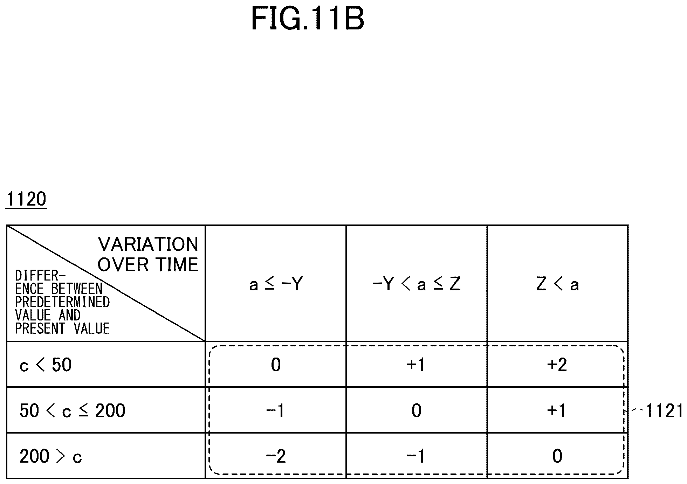

As another example, in the corresponding information 1120 shown in FIG. 11B, the rate of ventilation airflow 1121 of the ventilator 11 is referred to in five steps of "-2", "-1", "0", "+1", and "+2". Here, "-2" refers to that the ventilation airflow rate level of the ventilator 11 is decreased by two steps, and "-1" refers to that the ventilation airflow rate level of the ventilator 11 is decreased by one step. "0" refers to that the ventilation airflow rate level of the ventilator 11 is not changed. "+1" refers to that the ventilation airflow rate level of the ventilator 11 is increased by one step, and "+2" refers to that the ventilation airflow rate level of the ventilator 11 is increased by two steps. When the ventilation airflow rate level after the change exceeds the maximum value, the control unit 102 sets the ventilation airflow rate level of the ventilator 11 to the maximum value. Similarly, if the ventilation airflow rate level after the change falls below the minimum value, the control unit 102 sets the ventilation airflow rate level of the ventilator 11 to the minimum value or stops the operation of the ventilator 11.

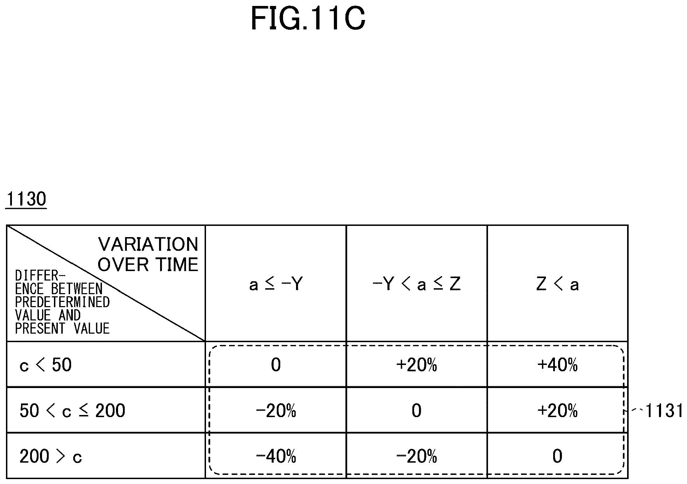

As another example, in the corresponding information 1130 shown in FIG. 11C, the rate of ventilation airflow 1131 of the ventilator 11 is referred to in five steps of "-40%", "-20%", "0", "+20%", and "+40%". Here, "-40%" refers to that the rate of ventilation airflow of the ventilator 11 is reduced by 40%, and "-20%" refers to that the rate of ventilation airflow of the ventilator 11 is reduced by 20%. "0" refers to that the rate of ventilation airflow of the ventilator 11 is not changed. "+20%" refers to that the rate of ventilation airflow of the ventilator 11 is increased by 20%, and "+40%" refers to that the rate of ventilation airflow of the ventilator 11 is increased by 40%. When the rate of ventilation airflow after the change exceeds the maximum value, the control unit 102 sets the rate of ventilation airflow of the ventilator 11 to the maximum value. Similarly, when the rate of ventilation airflow after the change falls below the minimum value, the control unit 102 sets the rate of ventilation airflow of the ventilator 11 to the minimum value or stops the operation of the ventilator 11.

Such corresponding information 1110, 1120, and 1130 are included in the setting information 112 stored in advance in the air-conditioning system 1, for example. The administrator 21 or the like may change the set values of the corresponding information 1110, 1120, and 1130 by using the administrator terminal 20.

Alternatively, the control unit 102 may determine the rate of ventilation airflow of the ventilator 11 without depending on the corresponding information 1110, 1120, and 1130.

For example, if the inclination a of the $CO_2$ concentration is "a > 0", the control unit 102 may control the rate of ventilation airflow of the ventilator 11 based on the difference c between the predetermined value of the $CO_2$ concentration and the present value of the $CO_2$ concentration as follows.

When the difference c between the predetermined value of the $CO_2$ concentration and the present value of the $CO_2$ concentration satisfies c < T7 × a, the control unit 102 raises the ventilation airflow rate level of the ventilator 11 by one step. Here, T7 is a preset seventh time T7 (e.g., twenty minutes), and a is the inclination a of the $CO_2$ concentration.

When the difference c between the predetermined value of the $CO_2$ concentration and the present value of the $CO_2$ concentration satisfies c < T8 × a, the control unit 102 raises the ventilation airflow rate level of the ventilator 11 by two steps. Here, T8 is the preset eighth time T8 (e.g., ten minutes). When the ventilation airflow rate level of the ventilator 11 exceeds the maximum level by the above control, the control unit 102 sets the ventilation airflow rate level of the ventilator 11 to the maximum level.

If the inclination a of the $CO_2$ concentration is "a ≤ 0", the control unit 102 may control the rate of ventilation airflow of the ventilator 11 based on the inclination a of the $CO_2$ concentration as follows.

When the inclination a of the $CO_2$ concentration satisfies a < A1, the control unit 102 decreases the rate of ventilation airflow of the ventilator 11 by one step. Here, A1 is a predetermined first inclination (e.g., -5).

When the inclination a of the $CO_2$ concentration satisfies a < A2, the control unit 102 decreases the rate of ventilation airflow of the ventilator 11 by two steps. Here, A2 is a predetermined second inclination (e.g., -10). When the ventilation airflow rate level of the ventilator 11 falls below the minimum level by the above control, the control unit 102 sets the ventilation airflow rate level of the ventilator 11 to the minimum level or stops the operation of the ventilator 11.

The control unit 102 can determine the rate of ventilation airflow of the ventilator 11 based on the present value of the $CO_2$ concentration in the target area 2 and the variation over time of the $CO_2$ concentration, for example, according to the above-described examples 1-3.

[EXAMPLE 4]

In example 4, an example of a process in which the air-conditioning system 1 includes a plurality of ventilators 11 and the control unit 102 adjusts the rate of ventilation airflow of the plurality of ventilators 11 based on the present value of the $CO_2$ concentration in the target area 2 and the variation over time of the $CO_2$ concentration in the target area 2 will be described.

(RATE OF VENTILATION AIRFLOW ADJUSTMENT PROCESS 1)

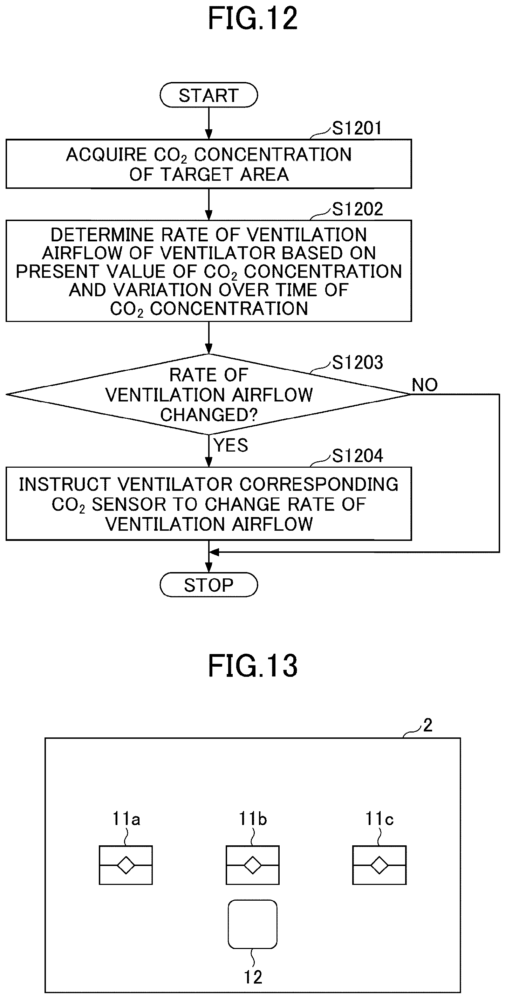

FIG. 12 is a flowchart 1 illustrating an example of a ventilation airflow rate adjustment process according to example 4. Here, a detailed description of the process similar to the ventilation airflow rate adjustment process described with reference to FIG. 6 is omitted.

In step S1201, the control unit 102 acquires the $CO_2$ concentration (carbon dioxide concentration) of the target area 2. Here, for example, as shown in FIG. 13, it is assumed that one $CO_2$ sensor 12 is installed in the target area 2. The $CO_2$ sensor 12 is installed, for example, in a place where there are many people in the target area 2, and the control unit 102 adjusts the rate of ventilation airflow of the ventilator 11b close to the $CO_2$ sensor.

Preferably, the control unit 102 acquires the $CO_2$ concentration data 111 of the target area 2 measured by the $CO_2$ sensor 12 at a first time interval (e.g., every one minute), and uses a moving average of the $CO_2$ concentration during a predetermined period (e.g., ten minutes before the present time) as the $CO_2$ concentration in the target area 2. The moving average is an example of smoothing the $CO_2$ concentration data 111. The control unit 102 may use a method other than the moving average to smooth the concentration data 111.

In step S1202, the control unit 102 determines the rate of ventilation airflow of the ventilator 11b based on the present value of the $CO_2$ concentration in the target area 2 and the variation over time of the $CO_2$ concentration in the target area 2.

Preferably, the control unit 102 executes the ventilation airflow rate determination process to determine the rate of ventilation airflow of the ventilator 11 at a second time interval (e.g., every five minutes) longer than the first time interval based on the $CO_2$ concentration in the target area 2 acquired at the first time interval (e.g., every one minute). For the ventilation airflow rate determination process, for example, the process described in example 1-3 can be applied.

In step S1203, the control unit 102 determines whether the rate of ventilation airflow of the ventilator 11b is changed from the previous rate of ventilation airflow. If the rate of ventilation airflow is changed, the control unit 102 proceeds to step S1204. Conversely, if the rate of ventilation airflow is not changed, the control unit 102 ends the process of FIG. 12.

In step S1204, the control unit 102 instructs the ventilator 11b to change the rate of ventilation airflow. In the example of FIG. 1, the control unit 102 transmits control data instructing the ventilator 11b whose rate of ventilation airflow has been changed to change the rate of ventilation airflow to the communication device 10. In response, the communication device 10 transfers the control data received from the administration server 100 to the ventilator 11b, and the ventilator 11b changes the rate of ventilation airflow according to the transferred control data.

When two or more $CO_2$ sensors 12 are installed in the target area 2, the control unit 102 may execute the same process for the respective ventilators 11 close to the respective $CO_2$ sensors 12.

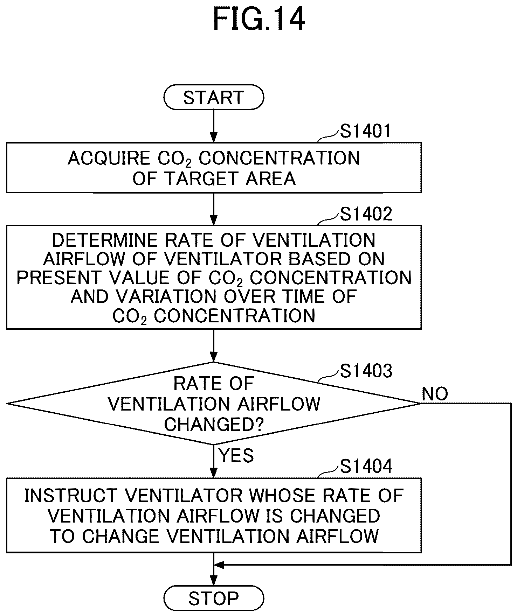

The process shown in FIG. 12 is an example. Instead of the process shown in FIG. 12, the control unit 102 may execute the ventilation airflow rate adjustment process as shown in FIG. 14, for example.

(VENTILATION AIRFLOW RATE ADJUSTMENT PROCESS 2)

FIG. 14 is a flowchart 2 illustrating an example of a ventilation airflow rate adjustment process according to example 4. Here, a detailed description of the process similar to the ventilation airflow rate adjustment process described with reference to FIGS. 6 and 12 is omitted.

In step S1401, the control unit 102 acquires the $CO_2$ concentration (carbon dioxide concentration) of the target area 2. Here, for example, as shown in FIG. 13, one $CO_2$ sensor 12 is installed in the target area 2, and the control unit 102 adjusts the rate of ventilation airflows of the ventilators 11a, 11b, and 11c installed in the target area 2.

Preferably, the control unit 102 acquires the $CO_2$ concentration data 111 of the target area 2 measured by the $CO_2$ sensor 12 at a first time interval (e.g., every one minute), and sets the moving average of the $CO_2$ concentration during a predetermined period (e.g., ten minutes before the present time) as the $CO_2$ concentration in the target area 2.

In step S1402, the control unit 102 determines the rate of ventilation airflows of the ventilators 11a, 11b, and 11c based on the present value of the $CO_2$ concentration in the target area 2 and the variation over time of the $CO_2$ concentration in the target area 2.

Preferably, the control unit 102 executes the determination process of the rate of ventilation airflows to determine the rate of ventilation airflows of the ventilators 11a, 11b, and 11c at a second time interval (e.g., every five minutes) longer than the first time interval, based on the $CO_2$ concentration in the target area 2 acquired at the first time interval (e.g., every one minute). For example, the control unit 102 may control the ventilators 11a, 11b, and 11c to have the same rate of ventilation airflows.

As another example, the ventilators 11a, 11b, and 11c may be pre-weighted according to, for example, a place where people tend to gather or a place where carbon dioxide tends to accumulate, and the rate of ventilation airflows of the ventilators 11a, 11b, and 11c may be controlled to be different rate of ventilation airflows. In this case, alternatively, the control unit 102 may apply the process described in example 1-3 to determine the rate of ventilation airflow of the ventilator 11b close to the $CO_2$ sensor 12, and determine the rate of ventilation airflows of the ventilators 11a and 11c based on the determined rate of ventilation airflow of the ventilator 11b and the weights of the ventilators 11a, 11b, and 11c.

In step S1403, the control unit 102 determines whether the rate of ventilation airflows of the ventilators 11a, 11b, and 11c are changed. If the rate of ventilation airflows are changed, the control unit 102 proceeds to step S1404. Conversely, if the rate of ventilation airflows are not changed, the control unit 102 ends the process of FIG. 12.

In step S1404, the control unit 102 instructs the ventilators 11 of the ventilators 11a, 11b, and 11c whose rate of ventilation airflows have been changed to change the rate of ventilation airflows.

When two or more $CO_2$ sensors 12 are installed in the target area 2, the ventilators 11 corresponding to the $CO_2$ sensors 12 are grouped in advance for the respective $CO_2$ sensors 12, and the control unit 102 may execute the process of FIG. 14 for the respective groups.

<EFFECT>

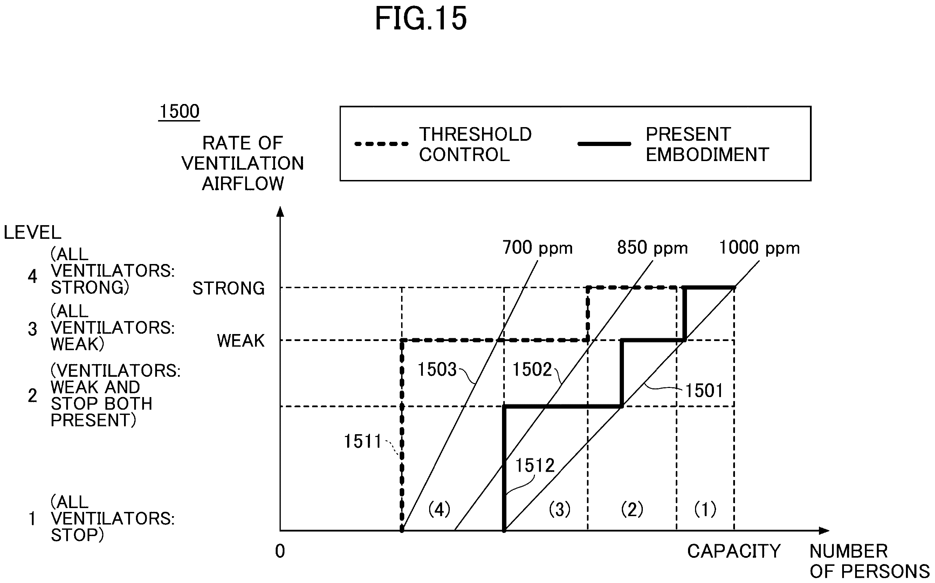

FIG. 15 is a drawing describing an effect of an air-conditioning system 1 according to the present embodiment. In the graph 1500 of FIG. 15, the horizontal axis indicates the number of persons in the target area 2, and the vertical axis indicates the rate of ventilation airflow. The rate of ventilation airflow is the total of the rate of ventilation airflows of the plurality of ventilators 11, the level 4 corresponds to the total of the rate of ventilation airflows when the rate of ventilation airflows of all the ventilators 11 are "strong", and the level 3 corresponds to the total of the rate of ventilation airflows when the rate of ventilation airflows of all the ventilators 11 are "weak". The level 2 corresponds to the total of the rate of ventilation airflows when the ventilators 11 of "weak" and the ventilators 11 of "stop" are both present, and the level 1 corresponds to the total of the rate of ventilation airflows when all the ventilators 11 are "stop".

In the graph 1500, the state in which the number of persons is (1) is assumed to be a state in which there are persons close to the capacity in the target area 2, the $CO_2$ concentration in the target area 2 is near 1000 ppm at the rate of ventilation airflow level 4, and the $CO_2$ concentration in the target area 2 exceeds 1000 ppm at the rate of ventilation airflow level 3. The state in which the number of persons is (2) is assumed to be a state in which the number of persons in the target area 2 is less than the capacity, the $CO_2$ concentration in the target area 2 is approximately 800 ppm to 1000 ppm at the rate of ventilation airflow level 4, and the $CO_2$ concentration in the target area 2 exceeds 850 ppm to 1000 ppm or less at the rate of ventilation airflow level 3. The state in which the number of persons is (3) is assumed to be a state in which the number of persons in the target area 2 is small and the $CO_2$ concentration in the target area 2 is 850 ppm or less at level 3 of the rate of ventilation airflow, and the $CO_2$ concentration in the target area 2 is over 1000 ppm at level 1. The state in which the number of persons is (4) is assumed to be a state in which the number of persons in the target area 2 is even smaller and the $CO_2$ concentration in the target area 2 is over 700 ppm to 1000 ppm at level 1 of the rate of ventilation airflow.

The first line 1501 refers to the relation between the number of persons whose $CO_2$ concentration is 1000 ppm and the rate of ventilation airflow. The second line 1502 refers to the relation between the number of persons whose $CO_2$ concentration is 850 ppm and the rate of ventilation airflow. The third line 1503 refers to the relation between the number of persons whose $CO_2$ concentration is 700 ppm and the rate of ventilation airflow.

Further, the line of the threshold control 1511 refers to a control in which the rate of ventilation airflow is set to level 3 when the $CO_2$ concentration in the target area 2 is 700 ppm to 850 ppm, the rate of ventilation airflow is set to level 4 when over 850 ppm, and the rate of ventilation airflow is set to level 1 when 700 ppm or less. The line of the present embodiment 1511 refers to the control of the rate of ventilation airflow of all the ventilators 11 according to the present embodiment.

In this state of (1), the threshold control 1511 and the present embodiment 1512 both set the rate of ventilation airflow to level 4 (the rate of ventilation airflows of all the ventilators 11 are "strong").

When the number of people in the target area 2 decreases and the state shifts from the state (1) to the state (2), the present embodiment 1512 switches the rate of ventilation airflow from level 4 to level 3 (the rate of ventilation airflows of all the ventilators 11 are "weak") based on the present value and variation over time of the $CO_2$ concentration. Conversely, in the threshold control 1511, ventilation is continued at the rate of ventilation airflow of level 4 until the $CO_2$ concentration in the target area 2 becomes 850 ppm or less.

When the number of people in the target area 2 further decreases, the present embodiment 1512 can further reduce the rate of ventilation airflow by one level based on the present value and variation over time of the $CO_2$ concentration. For example, in the example of FIG. 15, the air-conditioning system 1 changes the rate of ventilation airflow from level 3 to level 2 (the ventilators 11 of "weak" rate of ventilation airflow and the ventilators 11 of "stop" rate of ventilation airflow are both present).

When the number of people in the target area 2 further decreases and the state (2) shifts to the state (3), in the threshold control 1511, the rate of ventilation airflows of all the ventilators 11 are switched from level 4 to level 3.

When the number of people in the target area 2 further decreases and the state (3) shifts to the state (4), the present embodiment 1512 can change the rate of ventilation airflows of all the ventilators 11 to level 1 (stop the operation of all the ventilators 11) based on the present value of the $CO_2$ concentration and the variation over time. Conversely, in the threshold control 1511, the ventilation is continued at level 3 until the $CO_2$ concentration in the target area 2 becomes 700 ppm or less.

Thus, the present embodiment enables to ventilate for a minimum time and airflow within a range in which the carbon dioxide concentration in the space to be ventilated does not exceed a predetermined value. Therefore, according to the present embodiment, the rate of ventilation airflow of the air-conditioning system 1 can be reduced. By reducing the rate of ventilation airflow, the load on the air conditioner 13 of the air-conditioning system 1 can also be reduced.

<SUMMARY>

The air-conditioning system 1 according to the present disclosure is an air-conditioning system 1 including a ventilator 11 and a control unit 102 for controlling the ventilator 11, wherein the control unit 102 acquires the $CO_2$ concentration (carbon dioxide concentration) of a target area 2 to be ventilated by the ventilator 11, and adjusts the rate of ventilation airflow of the ventilator 11 based on the present value of the $CO_2$ concentration and the variation over time of the $CO_2$ concentration.

According to the air-conditioning system 1, the air-conditioning system 1 including the ventilator 11 enables to ventilate for a minimum amount of time and airflow within a range in which the $CO_2$ concentration in the target area 2 to be ventilated does not exceed a predetermined value.

Preferably, the control unit 102 adjusts the rate of ventilation airflow of the ventilator 11 using the present value of the $CO_2$ concentration in the target area 2, the predetermined value that is a predetermined $CO_2$ concentration, and the variation over time of the $CO_2$ concentration in the target area **2**. Thus, the control unit 102 can reduce the rate of ventilation airflow with preventing the $CO_2$ concentration in the target area 2 from exceeding the predetermined value, using information of the variation over time of the $CO_2$ concentration in the target area 2.

Preferably, the control unit 102 adjusts the rate of ventilation airflow of the ventilator 11 using the difference between the present value of the $CO_2$ concentration and the predetermined value that is a predetermined $CO_2$ concentration in the target area 2, and a variation over time of the $CO_2$ concentration in the target area 2. Thus, the control unit 102 can reduce the rate of ventilation airflow with preventing the $CO_2$ concentration in the target area 2 from exceeding the predetermined value, using information of the difference between the present value of the $CO_2$ concentration in the target area 2 and the predetermined value of the $CO_2$ concentration.

Preferably, the control unit 102 calculates the approach time for the $CO_2$ concentration in the target area 2 to reach a predetermined value that is a predetermined $CO_2$ concentration from the present value of the $CO_2$ concentration in the target area 2 and the variation over time of the $CO_2$ concentration in the target area 2, and adjusts the rate of ventilation airflow of the ventilator 11 based on the calculated approach time. Thus, the control unit 102 can reduce the rate of ventilation airflow with preventing the $CO_2$ concentration in the target area 2 from exceeding the predetermined value, using information of the approach time for the $CO_2$ concentration in the target area 2 to reach the predetermined value that is the predetermined $CO_2$ concentration.

Preferably, when the present value of the $CO_2$ concentration in the target area 2 is smaller than the first predetermined value of the $CO_2$ concentration determined in advance and the approach time for the $CO_2$ concentration in the target area 2 to reach the first predetermined value is within a first time, the control unit 102 increases the rate of ventilation airflow of the ventilator 11 by a first increase.

Preferably, when the approach time is within a second time, which is shorter than the first time, the control unit 102 increases the rate of ventilation airflow of the ventilator 11 by a second decrease, which is larger than the first increase. Thus, the air-conditioning system 1 can reduce the rate of ventilation airflow with preventing the $CO_2$ concentration in the target area 2 from exceeding the first predetermined value, even when the $CO_2$ concentration in the target area 2 increases rapidly.

Preferably, when the present value of the $CO_2$ concentration in the target area 2 is larger than the second predetermined value of the $CO_2$ concentration, and the time required for the $CO_2$ concentration in the target area 2 to reach the second predetermined value is within the third time, the control unit 102 lowers the rate of ventilation airflow of the ventilator 11 by a first decreasing amount.

Preferably, when the approach time for the $CO_2$ concentration in the target area 2 to reach the second predetermined value is within a fourth time, which is shorter than the third time, the control unit 102 lowers the rate of ventilation airflow of the ventilator 11 by a second decrease, which is larger than the first decrease, or stops the operation of the ventilator 11. Thus, the air-conditioning system 1 can reduce the rate of ventilation airflow when the $CO_2$ concentration in the target area 2 decreases rapidly.

Preferably, the control unit 102 stops the operation of the ventilator 11 when the present value of the $CO_2$ concentration in the target area 2 is equal to or less than a predetermined threshold value of the $CO_2$ concentration.

Preferably, the air-conditioning system 1 includes a plurality of ventilators 11, and the control unit 102 adjusts the rate of ventilation airflows of the plurality of ventilators based on the present value of the carbon dioxide concentration and the variation over time of the carbon dioxide concentration.

Preferably, the control unit 102 determines the rate of ventilation airflow of the ventilator 11 in a time interval longer than a time interval for measuring the $CO_2$ concentration in the target area 2.

Preferably, the control unit 102 smooths the acquired $CO_2$ concentration in the target area 2 and calculates the variation over time of the $CO_2$ concentration in the target area 2. Thus, the air-conditioning system 1 can reduce adverse effects caused by variations in the data of the $CO_2$ concentration and the carbon dioxide concentration in the target area 2.

Preferably, the air-conditioning system 1 includes a ventilator 11 and a communication device 10 capable of communicating with the ventilator 11, and the communication device 10 includes a control unit 102.

In the ventilation control method according to the present disclosure, in an air-conditioning system 1 including a ventilator 11 and a control unit 102 to control the ventilator 11, the control unit 102 acquires the $CO_2$ concentration in target area 2 to be ventilated by the ventilator 11, and adjusts the rate of ventilation airflow of the ventilator 11 based on the present value of the $CO_2$ concentration in the target area 2 and the variation over time of the $CO_2$ concentration in the target area 2.

Further, the present invention is not limited to these embodiments described above, but various variations and modifications may be made without departing from the claims and scope of the present invention.

The present application is based on and claims priority to Japanese patent application No. 2023-115680 filed on July 14, 2023, with the Japanese Patent Office, the entire contents of which are hereby incorporated by reference.

EXPLANATION OF REFERENCE NUMERALS

| 1 | air-conditioning system |
| 2 | target area (space to be ventilated) |
| 10 | communication device |

| 11, 11a, 11b, 11c | ventilator |
| 12 | $CO_2$ sensor |
| 100 | administration server |
| 102 | control unit |
| 500 | computer |
| N | communication network |

**Claims**

1. An air-conditioning system comprising:

   a ventilator; and
   a control unit configured to control the ventilator,
   wherein the control unit is configured to:

   acquire a carbon dioxide concentration in a space to be ventilated by the ventilator;
   and adjust a rate of ventilation airflow of the ventilator based on a present value of the carbon dioxide concentration, and a variation over time of the carbon dioxide concentration.

2. The air-conditioning system according to claim 1, wherein the control unit is configured to adjust the rate of ventilation airflow of the ventilator using the present value of the carbon dioxide concentration, a predetermined value that is a predetermined carbon dioxide concentration, and the variation over time of the carbon dioxide concentration.

3. The air-conditioning system according to claim 1, wherein the control unit is configured to adjust the rate of ventilation airflow of the ventilator using a difference between the present value of the carbon dioxide concentration and a predetermined value of the carbon dioxide concentration, and the variation over time of the carbon dioxide concentration.

4. The air-conditioning system according to claim 1, wherein the control unit is configured to:

   calculate an approach time for the carbon dioxide concentration to reach a predetermined value that is a predetermined carbon dioxide concentration based on the present value of the carbon dioxide concentration and the variation over time of the carbon dioxide concentration; and
   adjust the rate of ventilation airflow of the ventilator based on the approach time.

5. The air-conditioning system according to claim 1, wherein the control unit is configured to raise the rate of ventilation airflow of the ventilator by a first increase, when the present value of the carbon dioxide concentration is smaller than a first predetermined value of the carbon dioxide concentration and an approach time for the carbon dioxide concentration to reach the first predetermined value is within a first time.

6. The air-conditioning system according to claim 5, wherein the control unit is configured to raise the rate of ventilation airflow of the ventilator by a second increase larger than the first increase, when the approach time is within a second time shorter than the first time.

7. The air-conditioning system according to claim 1, wherein the control unit is configured to reduce the rate of ventilation airflow of the ventilator by a first decrease, when the present value of the carbon dioxide concentration is larger than a second predetermined value of the carbon dioxide concentration and an approach time for the carbon dioxide concentration to reach the second predetermined value is within a third time.

8. The air-conditioning system according to claim 7, wherein the control unit is configured to reduce the rate of ventilation airflow of the ventilator by a second decrease larger than the first decrease, or to stop an operation of the ventilator, when the approach time is within a fourth time shorter than the third time.

9. The air-conditioning system according to any one of claims 1 to 8, wherein the control unit is configured to stop the operation of the ventilator, when the present value of the carbon dioxide concentration is a predetermined threshold or less.

10. The air-conditioning system according to any one of claims 1 to 8, wherein:

the air-conditioning system includes a plurality of ventilators; and

the control unit is configured to adjust the rate of ventilation airflow of the plurality of ventilators based on the present value of the carbon dioxide concentration, and the variation over time of the carbon dioxide concentration.

11. The air-conditioning system according to any one of claims 1 to 8, wherein the control unit is configured to determine the rate of ventilation airflow in a time interval longer than a time interval to measure the carbon dioxide concentration.

12. The air-conditioning system according to any one of claims 1 to 8, wherein the control unit is configured to calculate the variation over time of the carbon dioxide concentration by smoothing an acquired carbon dioxide concentration.

13. The air-conditioning system according to any one of claims 1 to 8,

wherein the air-conditioning system includes the ventilator, and a communication device communicable with the ventilator, and

wherein the communication device includes the control unit.

14. A ventilation control method in an air-conditioning system includes a ventilator and a control unit configured to control the ventilator,

wherein the control unit is configured to:

acquire a carbon dioxide concentration in a space to be ventilated by the ventilator; and

adjust a rate of ventilation airflow of the ventilator based on a present value of the carbon dioxide concentration and a variation over time of the carbon dioxide concentration.

FIG.1

# FIG.2

200

# FIG.3

# FIG.4

1

# FIG.5

# FIG.6

START

S601

ACQUIRE $CO_2$ CONCENTRATION
OF TARGET AREA

S602

DETERMINE RATE OF VENTILATION
AIRFLOW OF VENTILATOR BASED ON
PRESENT VALUE OF $CO_2$ CONCENTRATION
AND VARIATION OVER TIME OF
$CO_2$ CONCENTRATION

S603

RATE OF
VENTILATION AIRFLOW
CHANGED?

NO

YES

S604

INSTRUCT VENTILATOR TO
CHANGE RATE OF VENTILATION AIRFLOW

STOP

# FIG.7A

| 710 SLOPE / PRESENT VALUE | a ≤ −Y | −Y < a ≤ Z | Z < a |
|---|---|---|---|
| 950 < x | L | H | H |
| 800 < x ≤ 950 | 0 (STOP) | L | H |
| x ≤ 800 | 0 (STOP) | 0 (STOP) | L |

712

711

713

# FIG.7B

720

| PRESENT VALUE \ SLOPE | $a \leq -Y$ | $-Y < a \leq Z$ | $Z < a$ |
|---|---|---|---|
| $950 < x$ | 0 | +1 | +2 |
| $800 < x \leq 950$ | −1 | 0 | +1 |
| $x \leq 800$ | −2 | −1 | 0 |

721

# FIG.7C

EP 4 521 034 A1

730

| SLOPE / PRESENT VALUE | $a \leq -Y$ | $-Y < a \leq Z$ | $Z < a$ |
|---|---|---|---|
| $950 < x$ | 0 | +20% | +40% |
| $800 < x \leq 950$ | −20% | 0 | +20% |
| $x \leq 800$ | −40% | −20% | 0 |

731

# FIG.8A

# FIG.8B

# FIG.9

# FIG.10

# FIG.11A

EP 4 521 034 A1

| 1110 / VARIATION OVER TIME — DIFFERENCE BETWEEN PREDETERMINED VALUE AND PRESENT VALUE | $a \leq -Y$ | $-Y < a \leq Z$ | $Z < a$ |
|---|---|---|---|
| $c < 50$ | L | H | H |
| $50 < c \leq 200$ | 0 (STOP) | L | H |
| $200 > c$ | 0 (STOP) | 0 (STOP) | L |

1112

1111

1113

# FIG.11B

<u>1120</u>

| DIFFER-ENCE BETWEEN PREDETERMINED VALUE AND PRESENT VALUE \ VARIATION OVER TIME | $a \leq -Y$ | $-Y < a \leq Z$ | $Z < a$ |
|---|---|---|---|
| $c < 50$ | 0 | +1 | +2 |
| $50 < c \leq 200$ | −1 | 0 | +1 |
| $200 > c$ | −2 | −1 | 0 |

~1121

# FIG.11C

EP 4 521 034 A1

1130

| VARIATION OVER TIME / DIFFER-ENCE BETWEEN PREDETERMINED VALUE AND PRESENT VALUE | $a \leq -Y$ | $-Y < a \leq Z$ | $Z < a$ |
|---|---|---|---|
| $c < 50$ | 0 | +20% | +40% |
| $50 < c \leq 200$ | −20% | 0 | +20% |
| $200 > c$ | −40% | −20% | 0 |

~1131

# FIG.12

START

S1201
ACQUIRE $CO_2$ CONCENTRATION
OF TARGET AREA

S1202
DETERMINE RATE OF VENTILATION
AIRFLOW OF VENTILATOR BASED ON
PRESENT VALUE OF $CO_2$ CONCENTRATION
AND VARIATION OVER TIME OF
$CO_2$ CONCENTRATION

S1203
RATE OF
VENTILATION AIRFLOW
CHANGED?　　　　　　　NO

YES
S1204
INSTRUCT VENTILATOR CORRESPONDING
$CO_2$ SENSOR TO CHANGE RATE OF
VENTILATION AIRFLOW

STOP

# FIG.13

2

11a　　　　　11b　　　　　11c

12

# FIG.14

START

$$S1401$$

ACQUIRE $CO_2$ CONCENTRATION
OF TARGET AREA

$$S1402$$

DETERMINE RATE OF VENTILATION
AIRFLOW OF VENTILATOR BASED ON
PRESENT VALUE OF $CO_2$ CONCENTRATION
AND VARIATION OVER TIME OF
$CO_2$ CONCENTRATION

$$S1403$$

RATE OF
VENTILATION AIRFLOW
CHANGED?

NO

YES

$$S1404$$

INSTRUCT VENTILATOR WHOSE RATE OF
VENTILATION AIRFLOW IS CHANGED
TO CHANGE VENTILATION AIRFLOW

STOP

# FIG.15

# EP 4 521 034 A1

| | INTERNATIONAL SEARCH REPORT | International application No. |
|---|---|---|
| | | **PCT/JP2024/025055** |

**A. CLASSIFICATION OF SUBJECT MATTER**

*F24F 7/007*(2006.01)i; *F24F 11/77*(2018.01)i; *F24F 110/70*(2018.01)n
FI: F24F7/007 B; F24F11/77; F24F110:70

According to International Patent Classification (IPC) or to both national classification and IPC

**B. FIELDS SEARCHED**

Minimum documentation searched (classification system followed by classification symbols)

F24F7/007; F24F11/77; F24F110/70

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/002245 A1 (MITSUBISHI ELECTRIC CORPORATION) 05 January 2017 (2017-01-05)<br>paragraphs [0009], [0066]-[0081], fig. 11-14 | 1-2, 4-6, 9-10, 13-14 |
| Y | | 3, 7, 9-13 |
| A | | 8 |
| Y | JP 2013-185768 A (KABUSHIKI KAISHA TOSHIBA) 19 September 2013 (2013-09-19)<br>fig. 3 | 3, 9-13 |
| Y | WO 2021/064844 A1 (MITSUBISHI ELECTRIC CORPORATION) 08 April 2021 (2021-04-08)<br>fig. 9 | 7, 9-13 |
| Y | JP 2022-157502 A (DAIKIN INDUSTRIES, LTD.) 14 October 2022 (2022-10-14)<br>paragraph [0088] | 11 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **03 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

34

**INTERNATIONAL SEARCH REPORT**

| International application No. |
| --- |
| **PCT/JP2024/025055** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2002-267217 A (YAZAKI CORPORATION) 18 September 2002 (2002-09-18) paragraphs [0026], [0029] | 12 |
| A | JP 2000-88320 A (MITSUBISHI ELECTRIC BUILDING TECHNO-SERVICE CO., LTD.) 31 March 2000 (2000-03-31) | 1-14 |
| A | JP 2021-143810 A (TOKYO GAS CO., LTD.) 24 September 2021 (2021-09-24) | 1-14 |
| A | JP 2023-31247 A (ASAHI KASEI EMD CORPORATION) 08 March 2023 (2023-03-08) | 1-14 |

Form PCT/ISA/210 (second sheet) (July 2022)

INTERNATIONAL SEARCH REPORT

Information on patent family members

International application No.

**PCT/JP2024/025055**

| Patent document cited in search report | | | Publication date (day/month/year) | Patent family member(s) | | | Publication date (day/month/year) |
|---|---|---|---|---|---|---|---|
| WO | 2017/002245 | A1 | 05 January 2017 | US 2018/0128511 A1 paragraphs [0023], [0137]-[0171], fig. 11-14 EP 3318809 A1 | | | |
| JP | 2013-185768 | A | 19 September 2013 | (Family: none) | | | |
| WO | 2021/064844 | A1 | 08 April 2021 | US 2022/0316742 A1 fig. 9 EP 4040059 A1 | | | |
| JP | 2022-157502 | A | 14 October 2022 | US 2024/0011658 A1 paragraph [0092] WO 2022/210777 A1 EP 4317816 A1 | | | |
| JP | 2002-267217 | A | 18 September 2002 | (Family: none) | | | |
| JP | 2000-88320 | A | 31 March 2000 | (Family: none) | | | |
| JP | 2021-143810 | A | 24 September 2021 | (Family: none) | | | |
| JP | 2023-31247 | A | 08 March 2023 | US 2023/0054957 A1 CN 115730699 A | | | |

Form PCT/ISA/210 (patent family annex) (July 2022)

**REFERENCES CITED IN THE DESCRIPTION**

**Patent documents cited in the description**

- JP 2000088320 A

- JP 2023115680 A